# EUROPEAN PATENT APPLICATION

(11) **EP 3 195 723 A1**
(43) Date of publication of application: **26.07.2017**
(21) Application number: 15841754.3
(22) Date of filing: 01.09.2015
(51) Int. Cl.: A01G 31/06

(54) **MULTI-STORY FARM HAVING VERTICAL GROWING ASSEMBLIES**

(30) Priority: 19.09.2014 FI 20145830
(71) Applicant: Limited Liability Company Anter, St.Petersburg 198095 (RU); Rufius, Oy, 53100 Lappeenranta (FI)
(72) Inventor: MIRZEABASOV, Timur Akhmedbekovich, St. Petersburg 188512 (RU); SHKOLINA, Lidia Nikolaevna, St. Petersburg 188512 (RU); ROMANOVA, Svetlana Timurovna, St. Petersburg 188512 (RU); BELOV, Dmitriy Olegovich, St. Petersburg 198207 (RU); VOLYNKIN, Valeriy Mikhaylovich, St. Petersburg 195213 (RU); GOLOVAN, Vadim Yurievich, St. Petersburg 194356 (RU); SULEYMANOV, Fail Nazmeevich, Ufa Republic Bashkortostan 450005 (RU); VODYANOY, Igor, Redondo Beach, CA 90277 (US)
(74) Representative: Berggren Oy, Helsinki & Oulu
(86) International application number: PCT/RU2015/000550
(87) International publication number: WO 2016/043623

(57) **Abstract**

The invention relates to farming, and more particularly to growing assemblies for cultivating plants and to multi-story ("vertical") farms for cultivating plants under artificial conditions. Proposed is a vertical growing assembly containing: a longitudinally elongate shelving rack with two bearing surfaces, which are disposed at a small angle a to the vertical; two sheets of artificial soil, which can be attached to the bearing surfaces of the shelving rack, wherein each of the sheet is designed so that a nutrient liquid can be fed thereinto or removed therefrom, said sheets including at least the following: a lower insulating layer, a water-retaining layer, a fertile layer, and a perforated upper insulating layer; and two sowing sheets with a plurality of seeds, said sowing sheets being disposed above the sheets of artificial soil in such a way as to allow the seeds to come into contact with the fertile layer in the sheets of artificial soil. Additionally set forth is a multi-story farm, the levels of which, not being provided with windows, have a plurality of the aforementioned vertical growing assemblies installed thereon.

## Description

### FIELD OF THE INVENTION

The present invention relates to the field of agriculture, and more specifically, to plant growing installations and to multi-storey, or so-called "vertical", farms for cultivating plants in artificial conditions comprising such plant growing installations.

### BACKGROUND OF THE INVENTION

One of the most promising ways of development of modern agriculture and crop husbandry is the use of multi-storey greenhouses referred to as "vertical farms" (see e.g. www.verticalfarm.com [1]; and Patent RU 2436917 entitled "Residential and Industrial Vertical Farm", published on 20.12.2011 [2]). A basic concept of the vertical farm consists in cultivating plants in artificial conditions within multi-storey structures, which results in enhancing the efficiency and the profitability of agricultural production due to a denser planting per unit area, a yield increase by adjusting the conditions in the farm, the prevention of pest access to the plants, practicing a year round continuous production, a reduction in transportation costs etc. In fact, vertical farms are specialized skyscrapers for plants that may be erected directly in major cities, and there exist presently a great number of projects of such buildings which are, for the most part, architectural designs.

In order to create a highly-efficient and productive vertical farm, it is necessary to solve a number of complicated technical problems apart from erecting a high-rise itself. First of all, one must maximize the planting density per unit area, intensify the plant growth within the farm, and make automatic the entire crop farming cycle. To intensify the plant growth, it is necessary, in particular, to establish within the farm optimal microclimatic and lighting conditions, as well as ensure the possibility of their adapting to specific varieties of plants.

In order to increase the planting density per unit area, it has been envisaged to use, in vertical farms, special multi-storey plant growing installations, and in particular multi-storey pipe installations of the "Phytopyramid" type for hydroponic substrateless cultivation using an air-water technique, known as "subirrigation aeroponic (see "Practical Photoculture on 'Phytopyramids' in Light-Tight Rooms", A. Selyanski, E. Lobashev, "Vegeculture" publishers, #1, January 2013, www.ovoschevodstvo.com [3]).

The "Phytopyramid" plant growing installation is composed of a supporting rack stack, whose side bearing surfaces are positioned at a relatively small angle (about 10°) to the vertical, and a system of growth pipes (bays/ troughs) arranged in rows, one row above the other, on the sides of said supporting rack stack, thus forming a multi-storey structure (7 levels). The cultivation of plants (stunted varieties of tomatoes) in growth pipes of the "Phytopyramid" type is carried out using the air-water method. An advantage of the "Phytopyramid" is the structure of the rack stack having inclined bearing surfaces that allows increasing the planting density per unit area. Unfortunately, the superficial area of these bearing surfaces is not completely used (only portions where growth pipes pass being involved). Besides, the substrateless air-water method of plant growing implemented in this system requires preliminary seedlings production outside the plant growing installation in question, which represents a substantial drawback from the viewpoint of optimization and automation of crop husbandry in conditions of the vertical farm.

A device for root nutrition of plants in artificial conditions, disclosed in Patent RU 2115303 (published on 20.07.1998) [4], provides a technical solution which has been chosen as the closest one to that of the present invention. In this device [4], a layer of soil substitute, formed by a root habitable capillary-porous medium, is fed with a liquid through a distributor having the form of a tube or tray by metered feeding of the liquid and its pumping out in case of negative stabilized pressure differential. This soil substitute layer is located adjacent to the surface of the liquid distributor, being e.g. wound around the distributing tube, thus forming a cylindrical root-habitable module. The soil substitute layer is coated externally with an opaque polyethylene film provided with perforations for seeding.

Among the advantages of the device [4] may be mentioned the use of artificial soil (soil substitute) with the possibility of retaining water and sufficiently high automation of the crop husbandry process. Furthermore, the fact that the liquid distributor used in the device [4] is made in the form of a tube allows the cylinder of the root-habitable module to be placed at an angle to the vertical (almost vertically), like a plant growing column (which may be especially useful in a gravity-free environment in the space), thus giving a possibility to increase the planting density per unit area of the vertical farm.

At the same time, the device [4] suffers from substantial disadvantages. Thus, in particular, no seeding automation means are provided. Moreover, the device [4] does not ensure optimal productivity, since it is deprived of means for stimulating the growth of plants, such as means for creating the electric potential difference in the soil (see e.g. Patent RU 2203530 published on 10.05.2003 [5]).

Besides, the use of devices of the type described in [4] in a multi-storey farm does not permit the obtainment of optimal planting density per unit area, which will be much inferior to the largest possible value. Indeed, even in a case where vertically, or quasi-vertically, oriented plant growing columns of the device [4] would be arranged on different levels of a multi-storey farm, it will be necessary to leave between them sufficient free space for placing technical means intended for servicing such columns, and in particular, means for creating and checking the microclimate and the illumination. It is also desirable to provide a free space around the columns in order to give access to their entire surface for the purpose of seeding and harvesting.

It should be noted finally that there are known various kinds of artificial soil, such as e.g. those described in Patents RU 2301825, published on 27.06.2007 [6] and RU 2345518, published on 10.02.2009 [7] having a number of advantages over the capillary-porous medium for soil substitute disclosed in [4].

### SUMMARY OF THE INVENTION

The object of the present invention is to remedy the disadvantages of the prior art installations. More particularly, it is aimed at increasing the planting density per unit area, and at the same time, intensifying the plant growth and ensuring the automation of the entire crop husbandry cycle in plant growing installations and multi-storey farms equipped with such installations.

This aim is achieved by developing a plant growing installation comprising a substantially vertical rack stack, whose bearing surfaces are completely coated with artificial soil having a multilayer sheet structure and consisting of a lower isolating layer, a water-retaining layer, a fertile layer, and an upper isolating layer having perforations made therein. In addition, the plant growing installations are provided with seeding sheets, comprising a plurality of seeds and placed above the artificial soil sheets, so as to provide contact between the seeds contained in the seeding sheet and the fertile layer of the artificial soil sheet thanks to perforations in the upper isolating layer. The sheets of artificial soil are designed to be automatically fed with nutrients for plant growth in the form of liquid, such as aqueous solution of mineral salts, there being also provided the subsequent evacuation of the liquid therefrom. Besides, the objective pursued by the invention is achieved by the provision of a multi-storey farm comprising such plant growing installations and pertinent means for servicing and automating the crop husbandry process.

It should be emphasized that the term "vertical" is used hereinafter for characterizing a "vertical plant growing installation" based on the use of a rack stack whose bearing surfaces are positioned substantially vertically. That is to say, the word "vertical" will be used in its literal meaning for denoting the vertical orientation of the installation's bearing surfaces in the space. On the other hand, as regards the farm, in order to more clearly characterize it, the term "multi-storey farm" is adopted rather than "vertical farm".

More particularly, the object of the invention is achieved with a vertical plant growing installation comprising: a lengthwise extended rack stack having two bearing surfaces connected to each other at their upper edge, each positioned at a small angle α with respect to the vertical and provided with means for securing an artificial soil sheet; two artificial soil sheets designed with a possibility of securing them to the bearing surfaces of the rack stack, each artificial soil sheet being designed with a possibility of feeding thereto, and evacuating therefrom, a nutrient liquid and including at least the following layers: a lower isolating layer, a water-retaining layer, a fertile layer, and an upper isolating layer having perforations made therein; and two seeding sheets, each comprising a plurality of seeds and designed to be placed above the upper perforated isolating layer of the corresponding artificial soil sheet, so as to provide contact between the seeds contained in the seeding sheet and the fertile layer of the artificial soil sheet.

In accordance with an embodiment of the invention, the means for securing the artificial soil sheet to the bearing surfaces of the rack stack have the form of a plurality of supporting studs equally spaced over the bearing surface and mounted perpendicular to this latter, each artificial soil sheet being provided with through holes intended to receive the above-mentioned supporting studs.

In accordance with a preferred modification of this embodiment, said supporting studs provided on the bearing surfaces of the rack stack and, consequently, the through holes made in the artificial soil sheets are designed so as to form rows.

In accordance with another embodiment, each artificial soil sheet additionally includes at least three reinforcing layers arranged, respectively, between the lower isolating layer and the water-retaining layer, between the water-retaining layer and the fertile layer, and between the fertile layer and the upper perforated isolating layer. Preferably, each of said reinforcing layers is made in the form of a grid of electrically conductive metal.

In accordance with a preferred embodiment, there is maintained, between the reinforcing layers positioned above and below the fertile layer of artificial soil sheets, a predetermined electric potential difference.

In accordance with yet another embodiment, the upper perforated isolating layer of artificial soil sheets comprises a plurality of sowing holes that ensure contact between the seeds contained in the corresponding seeding sheet and the fertile layer.

In accordance with a modification of this embodiment, said plurality of holes in the upper perforated isolating layer correspond to the plurality of seeds in the seeding sheet, so that when placing the seeding sheet above the upper perforated isolating layer, the seeds will be accommodated in the corresponding sowing holes, thus obtaining their contact with the fertile layer of the artificial soil sheet.

In accordance with still other embodiments of the invention, the plant growing installation possesses the following geometrical parameters: the angle α between the bearing surfaces of the rack stack and the vertical is about 5°, and the rack stack height is about 5 m.

The object of the invention is also a multi-storey farm having at least two windowless levels, each having mounted thereon a plurality of vertical plant growing installations of the above-described type. Furthermore, each level of this farm is provided with: means for feeding plant nutrition liquid into the artificial soil sheets secured on the vertical plant growing installations and for evacuating the liquid therefrom; means for providing suitable lighting and microclimate conditions; means for arranging the seeding sheets on the plant growing installations; means for harvesting plants from the plant growing installations; and control means for monitoring and automating the operation of other means used in the multi-storey farm.

In accordance with an embodiment of the invention, a plurality of vertical plant growing installations are arranged on each level of the farm, thus forming rows.

In accordance with another embodiment, the means for arranging the seeding sheets on the plant growing installations are designed with a possibility of expanding the seeding sheets above the artificial soil sheets while simultaneously watering the seeding sheets, thus putting the seeds contained therein into contact with the fertile layer of artificial soil sheets.

Besides, in accordance with an additional embodiment, the means for arranging the seeding sheets are designed with a possibility of removing the seeding sheets from the artificial soil sheets.

In accordance with another embodiment of the invention, each level of the farm additionally comprises a system for processing and/or unloading the harvested plants, the harvesting means provided on each level of the farm being designed with a possibility of automatically harvesting the plants from the vertical plant growing installations and transporting the harvested plants into the system for processing and/or unloading the harvested plants.

In accordance with a preferred embodiment, the multi-storey farm is substantially an independent system configured to yield a harvest of plants for a long period without introducing any means or materials from outside.

The technical effect achieved thanks to the implementation of the claimed inventions consists in increasing the planting density per unit area, while at the same time ensuring an intensification of the plant growth and the possibility of automating the whole crop husbandry cycle on the plant growing installations in a multi-storey farm.

### BRIEF DESCRIPTION OF THE DRAWINGS

Various embodiments of the invention will be described below more in detail with reference to the appended drawings, in which:
- Fig. 1 is a schematic representation of a rack stack of the vertical plant growing installation according to an embodiment of the present invention;
- Fig. 2 is a schematic representation of an artificial soil sheet according to an embodiment of the present invention; and
- Fig. 3 is a schematic top view representation of a level of the multi-storey farm according to an embodiment of the present invention.

### DETAILED DESCRIPTION OF THE PREFERRED EMBODIMENTS

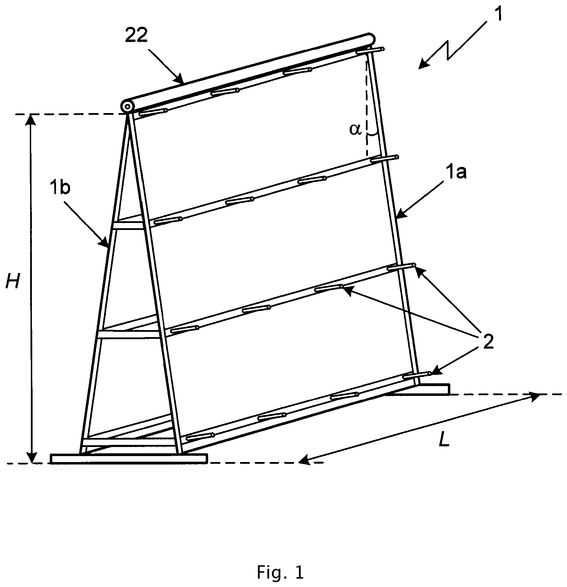

Fig. 1 schematically illustrates a rack stack 1 of the vertical plant growing installation according to a preferred embodiment of the invention. As visible in this figure, the plant growing installation comprises a lengthwise extended rack stack 1 having two bearing surfaces 1a and 1b connected to each other at their upper edge, each positioned at a small angle α with respect to the vertical and provided with means 3 for securing an artificial soil sheet.

In accordance with an embodiment of the invention, the plant growing installation rack stack 1 possesses the following geometrical parameters: the angle α between the bearing surfaces of the rack stack 1 and the vertical is about 5°, the rack stack height *H* is about 5 m, and the length *L* of this rack stack is chosen depending on parameters of the task to be solved, e.g. according to the dimensions of the multi-storey farm's level. This length may be from units to tens, even to hundreds of meters. Those skilled in the art will readily appreciate that the invention is not limited to the above-indicated geometrical parameters of the plant growing installation and the rack stack. On the contrary, specialists may vary such parameters and adapt them depending upon the problem situation without departing from the scope and essence of the invention, provided that the claimed technical effect is achieved.

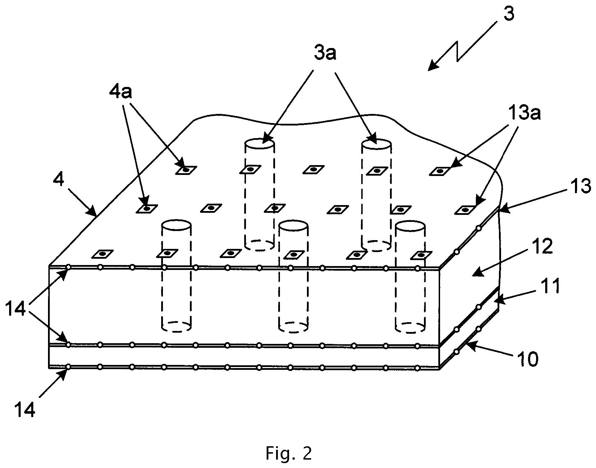

The bearing surfaces 1a and 1b of the rack stack 1 have mounted and fixed thereon, with the help of the securing means 2, two multilayer sheets 3 of artificial soil that include, as shown in Fig. 2, at least the following layers: a lower isolating layer 10, a water-retaining layer 11, a fertile layer 12, and an upper isolating layer 13 having perforations made therein. Each sheet 3 is designed with a possibility of feeding thereto, and evacuating therefrom, a nutrient liquid. Feeding the liquid into the sheet 3 may be carried out e.g. by means of a system for irrigating the water-retaining layer, which system is composed of a recipient with nutrient liquid, ducts connecting the recipient with the water-retaining layer 11 of the sheet 3 (e.g. via the lower isolating layer 10), and pumping means. The liquid evacuation from the sheet 3 may be carried out by means of an appropriate draining system. The irrigating and draining systems may be implemented using any suitable method known from the prior art, either as a single system or separately, as a part of the plant growing installation, or else can make part of the equipment present on a level of the multi-storey farm, depending on the requirements and conditions of the specific task to be solved. Preferably, feeding the liquid into the artificial soil sheets and its evacuation therefrom will be carried out under the surveillance of appropriate control means (such as, for example, control means provided on a level of the multi-storey farm) that will ensure an optimal scheme of nutrition of the plants cultivated in plant growing installations.

As shown in Fig. 2, the artificial soil sheets 3 have placed thereon, above the upper perforated isolating layer 13, seeding sheets 4, each comprising a plurality of seeds 4a (filed circles on Fig.2), preferably equally spaced over the surface of the sheet 4. With such structure, the perforations of the upper isolating layer ensure the contact between the seeds 4a and the fertile layer 12 of the artificial soil sheet.

In accordance with a preferred embodiment, the upper perforated isolating layer 13 of the artificial soil sheets 3 comprises a plurality of sowing holes 13a (square-shaped areas in Fig.2) that ensure contact between the seeds 5a and the fertile layer 12. In particular, in accordance with a preferred modification, said plurality of holes 13a made in the upper perforated isolating layer 13 correspond to the plurality of seeds 4a in the seeding sheet 4, so that when placing the seeding sheet 4 above the upper perforated isolating layer, the seeds 4a will be accommodated in the corresponding sowing holes 13a, thus obtaining their contact with the fertile layer 12 of the artificial soil sheet. The above-described variant of implementing perforations in the upper isolating layer 13 of the artificial soil sheet is only a preferred solution, which does not limit, by any means, the scope of the claimed invention. Indeed, perforations may be also made using any other suitable technique capable of ensuring contact between the seeds 4a and the fertile layer 12.

As represented in Fig. 1, the means 2 for securing the artificial soil sheet to the bearing surfaces 1a, 1b are made in the form of a plurality of supporting studs 2 equally spaced over the bearing surface 1a, 1b and mounted perpendicular to this latter, whereas each artificial soil sheet 3 is provided with through holes 3a intended to receive the above-mentioned supporting studs 2 as shown in Fig.2. In accordance with a preferred embodiment, said supporting studs 2 provided on the bearing surfaces of the rack stack 1 and, consequently, the through holes 3a made in the artificial soil sheets are designed so as to form rows. However, the invention is not limited to the variant contemplating the implementation of the means 2 for securing artificial soil sheets as supporting studs. Any other modifications of implementing the securing means 2 are well possible provided they will not affect the scope of the invention nor depart from its scope.
As shown in Fig. 2, each artificial soil sheet 4 additionally includes at least three reinforcing layers 14 arranged, respectively, between the lower isolating layer 10 and the water-retaining layer 11, between the water-retaining layer 11 and the fertile layer 12, and between the fertile layer 12 and the upper perforated isolating layer 13. It is preferable that each of the above-mentioned reinforcing layers 14 is made in the form of a grid of electrically conductive metal. Metals used for fabricating the reinforcing grids 14 are preferably chosen based on the requirement to create between the grids 14, and at least between layers surrounding the fertile layer 12, an electric potential difference. Thus, in particular, the reinforcing grids 14 may be made of metals spaced with respect to hydrogen in the Mendeleev's periodic table. For example, the grid placed between the water-retaining layer 11 and the fertile layer 12 may be made of copper, and that provided between the fertile layer 12 and the upper perforated isolating layer 13, of aluminum.

In accordance with a preferred embodiment, there is maintained, between the reinforcing layers (grids) 14 positioned above and below the fertile layer 12 of artificial soil sheets 3, a predetermined electric potential difference, which is necessary for intensifying the plant growth.

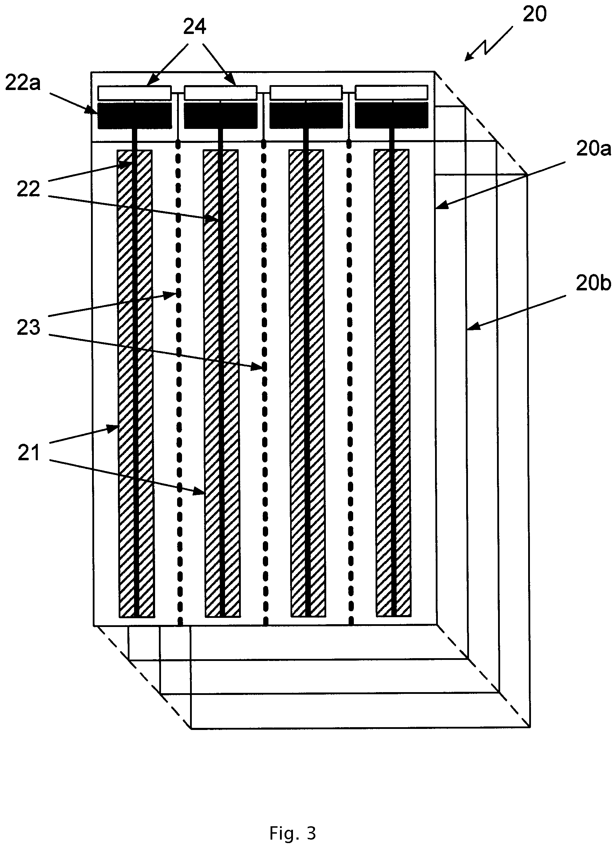

Fig. 3 schematically illustrates a multi-storey farm 20 according to an embodiment of the invention. This farm 20 has at least two levels 20a, 20b, each of which supports a plurality of vertical plant growing installations 21 according to one of the above-discussed embodiments. In accordance with a preferred embodiment of the invention, a plurality of vertical plant growing installations 21 are arranged on each level of the farm 20 in such a manner that they form rows, which allows the planting density per unit area to be maximized.

The levels of the farm 20 are made without windows. This permits to reduce heat transfer to the environment, thereby facilitating the creation and maintenance of a microclimate necessary for the plant growth.

In addition, each level of the farm 20 is equipped with: means 22 for feeding plant nutrition liquid into the artificial soil sheets 3 secured on the vertical plant growing installations 21 and for evacuating the liquid therefrom; means 23 for providing suitable lighting and microclimate conditions; means for arranging the seeding sheets on the plant growing installations (not shown); means for harvesting plants from the plant growing installations (not shown); and control means 24 for monitoring and automating the operation of other means used in the multi-storey farm.

The means 22 for feeding plant nutrition liquid into the sheets 3 and evacuating this liquid therefrom may be implemented, respectively, in the form of a system (22, 22a) for irrigating the water-retaining layer 12 of artificial soil sheets and a draining system (not shown), as described above.

The means 23 for providing suitable lighting and microclimate conditions may include luminaires, elements for regulating temperature, humidity and other microclimate parameters, as well as various necessary sensors. The means 23 may be implemented using any suitable methods known from the prior art, the invention being not limited to some specific variant of their implementation.

In accordance with an embodiment, the means for arranging the seeding sheets on the plant growing installations are designed with a possibility of expanding the seeding sheets 4 above the artificial soil sheets 3 while simultaneously watering the seeding sheets 4, thus putting the seeds 4a contained therein into contact with the fertile layer 12 of artificial soil sheets. Thus, e.g., the means for arranging the seeding sheets may be made in the form of a carriage with a roller, which carriage is provided with watering means and carries out, when moving along the bearing surface 1a, 1b in the direction from up to down, the expansion of the seeding sheet 4 along the artificial soil sheet 3 and at the same time, its watering. Besides, in accordance with an additional embodiment, the means for arranging the seeding sheets are designed with a possibility of removing the seeding sheets 4 from the artificial soil sheets 3, and more preferably, of replacing them, i.e. simultaneously removing the old seeding sheet 4 and applying a new sheet 4. Those skilled in the art will readily appreciate that various variants of implementing the means for arranging the seeding sheets are possible, all of them conforming to the essence of the invention without departing from its scope.

The means for harvesting plants from the plant growing installations may be also made in the form of a special carriage provided e.g. with hand shears, this carriage ensuring the harvest when moving along the bearing surface of the rack stack 1 (lengthwise or vertically). Various harvesting techniques known to those skilled in the art may be successfully employed for implementing the means when embodying the present invention, provided its essence is not altered.

The control means 24 for monitoring and automating the operation of other means used in the multi-storey farm may be implemented using known computing and software means or other known automation means that would manage the operation of other means present on a level of the farm 20 based on readings of a plurality of sensors making part, as well, of said means 24. Those skilled in the art will appreciate that the invention is not limited as to variants of implementing the control means 24, so that any such variants which do not depart from the teachings and essence of the invention will fall within its scope.

In accordance with another embodiment of the invention, each level of the farm 20 comprises a system for processing and/or unloading the harvested plants from the farm 20 (not shown). This system may comprise e.g. units for harvest storing and processing (for example, cereal threshing) and transmission pipelines for unloading harvest from the farm 20. The system may be also implemented using any suitable method known from the prior art. Additionally, according to this embodiment, the means for harvesting plants present on each level of the farm may be designed with a possibility of automatically harvesting the plants from the vertical plant growing installations 21 on a level of the farm 20 and transporting the harvested plants into the system for processing and/or unloading the harvested plants.

In addition, in accordance with a preferred embodiment, the multi-storey farm 20 is substantially an independent system configured to yield a harvest of plants for a long period without introducing any means or materials from outside. It should be evident to those skilled in the art that in such systems, it is necessary to ensure the initial provision of materials needed for initiating the crop husbandry, such as seeds, nutrients, liquid, energy store and so on. On the other hand, it will be also evident that the above-mentioned independent nature of the system implies the possibility of a long-term operation with yielding the harvest in an autonomous mode after having preliminarily provided the farm 20 with necessary materials.

Therefore, the above-discussed embodiments of the invention allow achieving of the necessary technical effect, namely increasing the planting density per unit area, in particular thanks to the use of a vertical structure of rack stacks in the proposed plant growing installations. At the same time, the invention permits to intensify the plant growth, in particular by creating a completely isolated artificial climate on the level of the multi-storey farm and providing an electric potential difference in the artificial soil layer. Finally, various embodiments of the invention give the possibility to automate the entire crop husbandry cycle on plant growing installations in the multi-storey farm.

The above-described embodiments are only preferable and/or exemplary solutions without limiting the scope of the claimed invention. After having acquainted themselves with this specification, those skilled in the art will be able to introduce various modifications and changes to the above embodiments of the invention or variants of implementing their individual features, having in mind that all such modifications and changes will fall within the scope of the invention defined by the appended Claims.

## Claims

1. A vertical plant growing installation (21), **characterized in that** it comprises:
- a lengthwise extended rack stack (1) having two bearing surfaces (1a, 1b) connected to each other at their upper edge, each positioned at a small angle α with respect to the vertical and provided with means (2) for securing an artificial soil sheet;
- two artificial soil sheets (3) designed with a possibility of securing them to the bearing surfaces of said rack stack, each artificial soil sheet being designed with a possibility of feeding thereto, and evacuating therefrom, a nutrient liquid and including at least the following layers: a lower isolating layer (10), a water-retaining layer (11), a fertile layer (12), and an upper isolating layer (13) having perforations made therein; and
- two seeding sheets (4), each comprising a plurality of seeds (4a) and designed to be placed above the upper perforated isolating layer of the corresponding artificial soil sheet, so as to provide contact between the seeds contained in the seeding sheet and the fertile layer of the artificial soil sheet.

2. The vertical plant growing installation according to claim 1, **characterized in that** the means (2) for securing the artificial soil sheet (3) to the bearing surfaces of the rack stack (1) have the form of a plurality of supporting studs equally spaced over the bearing surface and mounted perpendicular to this latter, each artificial soil sheet being provided with through holes intended to receive said supporting studs.

3. The vertical plant growing installation according to claim 2, **characterized in that** said supporting studs provided on the bearing surfaces of the rack stack and, consequently, the through holes made in the artificial soil sheets are designed so as to form rows.

4. The vertical plant growing installation according to claim 1, **characterized in that** each artificial soil sheet (3) additionally includes at least three reinforcing layers (14) arranged, respectively, between the lower isolating layer (10) and the water-retaining layer (11), between the water-retaining layer (11) and the fertile layer (12), and between the fertile layer (12) and the upper perforated isolating layer (13).

5. The vertical plant growing installation according to claim 4, **characterized in that** each of said reinforcing layers is made in the form of a grid of electrically conductive metal.

6. The vertical plant growing installation according to claim 5, **characterized in that** wherein there is maintained, between the reinforcing layers positioned above and below the fertile layer of artificial soil sheets, a predetermined electric potential difference.

7. The vertical plant growing installation according to claim 1, **characterized in that** the upper perforated isolating layer (13) of artificial soil sheets (3) comprises a plurality of sowing holes that ensure contact between the seeds contained in the corresponding seeding sheet and the fertile layer.

8. The vertical plant growing installation according to claim 7, **characterized in that** said plurality of holes in the upper perforated isolating layer (13) correspond to the plurality of seeds in the seeding sheet (4), so that when placing the seeding sheet above the upper perforated isolating layer, the seeds will be accommodated in the corresponding sowing holes, thus obtaining their contact with the fertile layer (12) of the artificial soil sheet (3).

9. The vertical plant growing installation according to claim 1, **characterized in that** the angle α is about 5°.

10. The vertical plant growing installation according to claim 1, **characterized in that** the rack stack height is about 5 m.

11. A multi-storey farm (20) having at least two windowless levels (20a, 20b), **characterized in that** each level has mounted thereon:
- a plurality of vertical plant growing installations (21) according to any of claims 1-10;
- means for feeding plant nutrition (22) liquid into the artificial soil sheets (3) secured on the vertical plant growing installations and for evacuating the liquid therefrom;
- means for providing suitable lighting (23) and microclimate conditions;
- means for arranging the seeding sheets on the plant growing installations;
- means for harvesting plants from the plant growing installations; and
- control means (24) for monitoring and automating the operation of other means used in the multi-storey farm.

12. The multi-storey farm according to claim 11, **characterized in that** a plurality of vertical plant growing installations (21) are arranged on each level of the farm, thus forming rows.

13. The multi-storey farm according to claim 11, **characterized in that** the means for arranging the seeding sheets on the plant growing installations are designed with a possibility of expanding the seeding sheets above the artificial soil sheets (3) while simultaneously watering the seeding sheets (4), thus putting the seeds contained therein into contact with the fertile layer (12) of artificial soil sheets.

14. The multi-storey farm according to claim 13, **characterized in that** the means for arranging the seeding sheets are additionally designed with a possibility of removing the seeding sheets (4) from the artificial soil sheets (3).

15. The multi-storey farm according to claim 11, **characterized in that** each level of the farm additionally comprises a system for processing and/or unloading the harvested plants, the harvesting means provided on each level of the farm being designed with a possibility of automatically harvesting the plants from the vertical plant growing installations (21) and transporting the harvested plants into the system for processing and/or unloading the harvested plants.

16. The multi-storey farm according to claim 15, **characterized in that** it is substantially an independent system configured to yield a harvest of plants for a long period without introducing any means or materials from outside.
